# EUROPÄISCHE PATENTSCHRIFT

(11) **EP 3 405 308 B1**
(45) Veröffentlichungstag und Bekanntmachung des Hinweises auf die Patenterteilung: **22.02.2023**
(21) Anmeldenummer: 16784884.5
(22) Anmeldetag: 19.10.2016
(51) Int. Cl.: B23Q 17/00, B44B 5/00, G07C 11/00

(54) **SYSTEM ZUR HANDHABUNG VON KENNZEICHEN-PLATINEN IN PRÄGEPRESSEN, SOWIE VERFAHREN ZUM BETREIBEN DES SYSTEMS**
SYSTEM FOR HANDLING MARKING PLATES IN EMBOSSING PRESSES, AND METHOD FOR OPERATING THE SYSTEM
DISPOSITIF DE MANIPULATION DE PLAQUES D'IMMATRICULATION DANS DES PRESSES À ESTAMPER, AINSI QUE PROCÉDÉ PERMETTANT DE FAIRE FONCTIONNER LE SYSTÈME

(30) Priorität: 20.01.2016 DE 102016100935
(43) Veröffentlichungstag der Anmeldung: 28.11.2018
(73) Patentinhaber: Erich Utsch AG, 57080 Siegen (DE)
(72) Erfinder: MÖLLER, Alexander, 57548 Kirchen-Herkersdorf (DE); WOLLENWEBER, Thomas, 57076 Siegen (DE); KÖLSCH, Jörg, 57234 Wilnsdorf (DE)
(74) Vertreter: Patentanwälte Bauer Vorberg Kayser
(86) Internationale Anmeldenummer: PCT/EP2016/075135
(87) Internationale Veröffentlichungsnummer: WO 2017/125174

(56) Entgegenhaltungen:
- DE-A1- 19 808 801
- DE-A1-102008 025 104
- DE-C1- 19 602 153

## Beschreibung

Die Erfindung betrifft ein System und ein Verfahren zur Handhabung von Kennzeichen-Platinen zur Verwendung in Prägepressen, wobei die Prägepressen zum Prägen von Kennzeichen-Platinen ausgebildet sind und die verwendeten Kennzeichen-Platinen jeweils ein optoelektronisch erfassbares Identifikationsmerkmal aufweisen, mit dem die jeweilige Kennzeichen-Platine im System identifizierbar ist.

Im Bereich der Herstellung von KFZ-Kennzeichenschildern sind solche Prägepressen bekannt, mit denen in einen Kennzeichen-Rohling eine bestimmte Kennzeichen-Legende in Form beispielsweise von Buchstaben und Zahlen eingeprägt und anschließend eingefärbt wird. Die dabei verwendeten Kennzeichen-Rohlinge werden auch als Kennzeichen-Platinen bezeichnet und haben üblicherweise bereits das gewünschte Format und optional weitere Merkmale wie beispielsweise einen erhabenen umlaufenden Rand, landesspezifische Aufdrucke, Sicherheitsmerkmale, etc. Wird für ein Fahrzeug eine bestimmte Kennzeichen-Legende vergeben, wird diese individuell in eine Kennzeichen-Platine eingebracht.

In einer Prägepresse wird die Legende dann erhaben in die Platine geprägt und anschließend in einer weiteren Maschine eingefärbt, wodurch insgesamt ein KFZ-Kennzeichenschild erzeugbar ist. Dazu wird eine Kennzeichen-Platine zunächst in die Prägepresse eingelegt. Die für die Prägung erforderlichen alphanumerischen Prägewerkzeuge in Form von sogenannten Klotzwerkzeugen oder Gegendruckwerkzeugen werden von einem Bediener manuell beispielsweise in eine Schublade gelegt und zusammen mit der Kennzeichen-Platine in die Prägepresse eingeschoben. Die Prägepresse kann dann den Prägevorgang für eine bestimmte Kennzeichen-Legende durchführen. Eine solche Prägepresse ist beispielsweise aus der EP 1 207 082 B1 bekannt.

Derartige Prägepressen können insbesondere in KFZ-Zulassungsstellen zur Anwendung kommen, bei denen ein Bediener von einer Person einen Laufzettel der KFZ-Behörde erhält, auf dem die zu prägende KFZ-Legende vermerkt ist. Ein solcher Prägeauftrag kann auch über das Internet oder sonstige andere Datenverbindungen an einen Bediener einer Prägepresse übermittelt werden. Beim Prägevorgang kann es jedoch zu manuellen Fehlern kommen, wenn der Bediener beispielsweise nicht die korrekten Klotzwerkzeuge für einen Prägeauftrag einlegt. Ferner können Manipulationen stattfinden, wenn versucht wird, eine bestimmte, von der KFZ-Behörde vergebene Legende in mehrere Kennzeichen-Platinen einzubringen.

Bekannt ist es daher auch, einer Prägepresse einen Prägeauftrag auf elektronischem Weg zu übermitteln, wodurch die für den erforderlichen Prägevorgang erforderlichen Informationen in der Prägepresse hinterlegt werden können. Beispielsweise können einem Bediener dann verschiedene Informationen auf einem Monitor angezeigt werden, um einen Prägeauftrag korrekt abzuarbeiten. Manipulationen lassen sich auf diese Weise jedoch nicht vollständig verhindern.

Aus der DE 10 2008 025 104 A1 ist D1 eine Prägepresse bekannt, welche zur Verwendung mit Schildplatinen vorgesehen ist, die jeweils mit einer unter der Oberfläche in die Schildplatine eingelaserten individuellen Ident-Nummer versehen sind. Darüber hinaus ist die aus der DE 10 2008 025 104 A1 bekannte Prägepresse dazu eingerichtet, visuell erfassbare Merkmale einer eingelegten Schildplatine mittels einer Kamera zu erfassen. Hierzu wird die Kamera Schildplatinen-formatbezogen so verfahren, dass sie auf den Bereich der Schildplatine gerichtet ist, in dem das zu erfassende Merkmal zu erwarten ist. Die erfasste Ident-Nummer sowie die visuell erfassten Merkmale können mit den Daten eines auszuführenden Prägeauftrags verglichen werden. Nachteilig aus der aus der DE 10 2008 025 104 A1 bekannten Prägepresse ist der aufwendige Aufbau, welcher zur Erfassung der individuellen Ident-Nummer sowie der visuell erfassbaren Merkmale der Kennzeichenplatine verwendet wird.

Aufgabe der Erfindung ist es daher, ein System und ein Verfahren zur Handhabung von Kennzeichen-Platinen zur Verwendung in Prägepressen bereitzustellen, mit dem sich Fehler und Manipulationen besser verhindern lassen.

Erfindungsgemäß wird diese Aufgabe durch ein System gemäß dem unabhängigen Anspruch 1 gelöst. Vorteilhafte Weiterbildungen des Systems ergeben sich aus den Unteransprüchen 2-9. Ferner wird die Aufgabe durch ein Verfahren gemäß dem unabhängigen Anspruch 10 gelöst. Vorteilhafte Weiterbildungen des Verfahrens ergeben sich aus den Ansprüchen 11-15.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße System dient zur Handhabung von Kennzeichen-Platinen zur Verwendung in Prägepressen und umfasst folgende Komponenten:
- wenigstens eine Prägepresse, die zum Prägen von Kennzeichen-Platinen ausgebildet ist und eine Steuereinheit umfasst;
- eine Auftragskomponente, welche zur Erzeugung von Daten für Prägeaufträge und zur Übermittlung dieser Prägeaufträge an die Steuereinheit wenigstens einer Prägepresse ausgebildet ist;
- eine zentrale Verwaltungseinheit, die in kommunikativer Verbindung mit der wenigstens einen Prägepresse steht;
- mehrere Kennzeichen-Platinen, die jeweils ein optoelektronisch erfassbares Identifikationsmerkmal aufweisen, in dem wenigstens eine die jeweilige Kennzeichen-Platine identifizierende Angabe hinterlegt ist, wobei
   a) die Prägepresse zur Erfassung des Identifikationsmerkmals einer Kennzeichen-Platine ausgebildet ist,
      und das System ausgebildet ist
   b) zum Auslesen der die Kennzeichen-Platine identifizierenden Angabe aus einem von der Prägepresse erfassten Identifikationsmerkmal,
   c) zum Vergleich einer aus dem Identifikationsmerkmal ausgelesenen, die Kennzeichen-Platine identifizierenden Angabe mit hinterlegten zulässigen Angaben, und
   d) zur Freigabe eines Prägevorgangs in der Prägepresse, falls die Durchführung des Vergleichs unter c) ergibt, dass es sich bei der ausgelesenen, die Kennzeichen-Platine identifizierenden Angabe um eine zulässige Angabe handelt.

Insbesondere kann das System mehrere Prägepressen umfassen, die innerhalb des Systems betrieben werden. Beispielsweise kann es sich dabei um mehrere behördliche Prägestellen handeln, die über ein oder mehrere Prägepressen verfügen. Jede dieser Prägepressen steht vorzugsweise in Verbindung mit einer oder mehreren Auftragskomponenten, von denen Prägeaufträge erzeugt und an die Prägepressen übermittelt werden.

Derartige Prägeaufträge können neben der für ein zu prägendes Kennzeichen vergebenen Legende wenigstens auch das Format des Kennzeichens enthalten. In einer solchen Ausführungsform der Erfindung können die Daten für einen Prägeauftrag ebenfalls Informationen über das Format einer zu prägenden Kennzeichen-Platine umfassen, wobei in dem optoelektronisch erfassbaren Identifikationsmerkmal einer Kennzeichen-Platine das Format der jeweiligen Kennzeichen-Platine hinterlegt ist. Das System ist dann vorzugsweise ausgebildet
e) zum Auslesen des Formats der Kennzeichen-Platine aus einem von der Prägepresse erfassten Identifikationsmerkmal,
f) zum Vergleich eines aus dem Identifikationsmerkmal ausgelesenen Formats einer Kennzeichen-Platine mit Informationen über das Format einer zu prägenden Kennzeichen-Platine eines Prägeauftrags, und
g) zur Freigabe eines Prägevorgangs in der Prägepresse, falls die Durchführung der Vergleichs unter f) ergibt, dass das Format der Kennzeichen-Platine dem Format eines Prägeauftrags entspricht.

Die Prägeaufträge können den Prägepressen von einer Auftragskomponente kabelgebunden oder auch kabellos beispielsweise über eine Funkverbindung übermittelt werden. Dabei können die Informationen eines Prägeauftrags einem Bediener lediglich auf einem Monitor einer Prägepresse angezeigt werden, sie können aber auch dazu genutzt werden, um einen Prägeauftrag korrekt durchzuführen. Beispielsweise können Klotzwerkzeuge ebenfalls mit Identifikationsmerkmalen versehen sein, die nach der Einlegung durch den Bediener maschinell überprüft werden. Der Prägeauftrag kann dann nur gestartet werden, wenn die richtigen Prägewerkzeuge eingelegt sind. So können teure Fehlprägungen vermieden werden.

Jede Kennzeichen-Platine, die zum Einprägen einer Kennzeichen-Legende verwendet werden kann, ist erfindungsgemäß mit einem optoelektronisch erfassbaren bzw. maschinenlesbaren Identifikationsmerkmal versehen. Hierbei handelt es sich beispielsweise um einen Barcode oder einen zweidimensionalen Data-Matrixcode, der auf die Platine aufgedruckt oder in diese eingelasert ist.

In diesem Identifikationsmerkmal können verschiedene Informationen verschlüsselt hinterlegt und somit auslesbar sein, wenn das Identifikationsmerkmal optoelektronisch erfasst wird. Bei diesen Informationen handelt es sich vorzugsweise wenigstens um eine Angabe, mit der die jeweilige Kennzeichen-Platine eindeutig identifizierbar ist. Ergänzend kann das Format der jeweiligen Platine hinterlegt sein. Bei der die Platine identifizierenden Angabe handelt es sich beispielsweise um eine Seriennummer bestehend aus einer Zahlen- und/oder Buchstabenfolge. Ergänzend können auch das Produktionsdatum, eine Länder- oder Kundenkennung oder sonstige andere Informationen im Code verschlüsselt sein.

Das erfindungsgemäße System ist wenigstens für eine Überprüfung der Seriennummer einer Kennzeichen-Platine ausgebildet. Bevor eine Kennzeichen-Platine mit der Legende eines Prägeauftrags geprägt werden kann, wird das Identifikationsmerkmal der Platine dazu erfasst und die betreffenden Informationen ausgelesen. Die Prägepresse ist hierzu entsprechend ausgebildet. Beispielsweise kann sie einen Handscanner aufweisen, mit dem ein Bediener einen Code auf einer Kennzeichen-Platine erfassen kann. Der Scanner kann jedoch auch in die Prägepresse integriert sein, so dass der Code beim Einschieben der Platine in die Presse erfasst wird. Auch Kombinationen beider Ausführungsformen sind möglich. Aus dem so erfassten Identifikationsmerkmal können per Entschlüsselung wenigstens die die jeweilige Platine identifizierende Angabe - im Folgenden vereinfacht Seriennummer genannt - und vorzugsweise auch das Format der Platine ausgelesen werden. Das System sieht dann vor, dass der Prägevorgang nur freigegeben wird, wenn es sich bei der ausgelesenen Seriennummer um eine zulässige Seriennummer handelt. Diese Überprüfung kann ergänzt werden durch eine Überprüfung des Formats der Platine, so dass der Prägevorgang nur freigegeben wird, wenn zusätzlich auch das ausgelesene Format mit dem Format des aktuellen Prägeauftrags übereinstimmt. Ist das Ergebnis dieser Prüfungen jeweils negativ, wird ein Prägevorgang folglich blockiert und kann nicht durchgeführt werden.

Auf diese Weise können Fehler beim Prägen und Manipulationen effektiv verhindert werden. Über die Überprüfung der Seriennummer kann beispielsweise sichergestellt werden, dass nur zulässige Platinen verwendet werden. Dabei kann beispielsweise überprüft werden, ob die erfasste Seriennummer zu einem bestimmten Nummernkreis gehört, d.h. ob es sich bei der Platine um eine Platine handelt, die von einer Behörde zugelassen wurde. Es können jedoch auch Mehrfachverwendungen von Platinen verhindert werden. Beispielsweise liegt ein typischer Manipulationsversuch darin, eine Platine mit einer an sich zulässigen Seriennummer zu erfassen, um den Prägevorgang freizugeben, diesen dann jedoch mit einer anderen Platine durchzuführen, bei der es sich unter Umständen um keine zulässige Platine handelt. Die zulässige Platine könnte dann für diesen Zweck manipulativ für eine Vielzahl von Prägevorgängen eingesetzt werden.

Um auch diese Art der Manipulation zu verhindern, wird eine von einer Platine erfasste Seriennummer vorzugsweise aus dem System gestrichen bzw. anderweitig gekennzeichnet, sobald sie einmal an einer Prägepresse erfasst und somit verwendet wurde. Die Prüfung, ob es sich um eine zulässige Seriennummer handelt, kann dann anhand eines Datenbestands von noch nicht benutzten Seriennummern erfolgen.

Entspricht eine erfasste Seriennummer einer Kennzeichen-Platine keiner zulässigen Seriennummer und/oder entspricht ein erfasstes Format einer Kennzeichen-Platine nicht dem Format eines aktuellen Prägeauftrags, der an einer Prägepresse durchgeführt werden soll, kann somit kein Prägevorgang stattfinden. Der Prägevorgang wird blockiert, was dem Bediener der Prägepresse beispielsweise akustisch und/oder optisch mit erläuternden Informationen angezeigt werden kann. Bei einem falschen Format kann vorgesehen sein, dass der Prägeauftrag grundsätzlich noch durchgeführt werden kann, wenn eine andere Kennzeichen-Platine in die Prägepresse eingelegt und deren Identifikationsmerkmal erneut eingelesen wird. Stimmt das Format dieser Kennzeichen-Platine nun mit dem Format des durchzuführenden Prägeauftrags überein, wird der Prägevorgang freigegeben.

Bei einer Nichtübereinstimmung zwischen Seriennummern können optional striktere Maßnahmen vorgesehen sein. Beispielsweise kann vorgesehen sein, dass der betreffende Prägeauftrag nicht mehr durchgeführt werden kann, auch wenn anschließend eine andere Kennzeichen-Platine mit einer zulässigen Seriennummer eingeschoben wird.

Das Auslesen von Informationen aus einem Identifikationsmerkmal einer Platine und der Vergleich mit hinterlegten Informationen, um einen Prägevorgang freizugeben oder zu blockieren, kann von verschiedenen Komponenten des Systems durchgeführt werden. Beispielsweise kann eine Prägepresse selbst ausgebildet sein, um entsprechende Informationen in einer Speichereinheit zu hinterlegen und erfasste Informationen mit so hinterlegten Informationen zu vergleichen. Die Prägepresse ist in einer Ausführungsform der Erfindung daher zur Durchführung einer oder mehrerer der zuvor genannten Vorgänge b) bis g) ausgebildet. Dies hat den Vorteil, dass die Prägepresse eine Überprüfung schnell und ohne Verzögerungen durch Datenübertragungswege zu anderen Komponenten durchführen kann. Hierzu müssen jedoch zulässige Seriennummern in der Prägepresse hinterlegt sein, während der Formatvergleich ohne Weiteres anhand eines von der Prägepresse erhaltenen Prägeauftrags durchgeführt werden kann.

In einer alternativen Ausführungsform der Erfindung kann auch die zentrale Verwaltungseinheit zur Durchführung einer oder mehrerer der Vorgänge b) bis g) ausgebildet sein. An der Prägepresse erfasste Daten eines Identifikationsmerkmals würden dann zunächst an die zentrale Verwaltungseinheit übermittelt, welche zumindest den Vergleich mit in der Verwaltungseinheit hinterlegten Seriennummern durchführen könnte und der Prägepresse ein Vergleichsergebnis zurücksendet. Dies kann vorteilhaft sein, da die zentrale Verwaltungseinheit so alle Seriennummern des Systems zentral verwalten kann. Hierzu sollten alle Prägepressen jedoch möglichst über schnelle Datenleitungen mit der zentralen Verwaltungseinheit verbunden sein, was unter Umständen nicht durchgehend gewährleistet werden kann. Für diesen Fall kann die zuvor genannte Ausführungsform, bei welcher eine Steuereinheit der Prägepresse die Vorgänge b) bis g) durchführt, zweckmäßiger sein. Auch Kombinationen beider Ausführungsformen sind möglich, so dass die verschiedenen Vorgänge auf die Prägepresse und eine zentrale Verwaltungseinheit aufgeteilt sind.

Die Prägepresse kann zur Erfassung eines Identifikationsmerkmals von einer Kennzeichen-Platine unterschiedlich ausgeführt sein. Beispielsweise kann sie einen oder mehrere interne Scanner aufweisen, mit denen Kennzeichen-Platinen beim Einbringen in die Prägepresse erfassbar sind. Ergänzend oder alternativ kann ein Handscanner vorgesehen sein.

Neben der Handhabung von Kennzeichen-Platinen an einer Prägepresse kann das erfindungsgemäße System ferner dazu genutzt werden, um die Handhabung von Kennzeichen-Platinen und geprägten Kennzeichen innerhalb eines Warenbestandssystems zu verwalten. Dies betrifft beispielsweise die Lagerhaltung, das Versenden von Platinen und geprägten Kennzeichen zwischen verschiedenen Lagern mit Warenausgabe und Wareneinnahme, das Aushändigen von Kennzeichen, Reporting-Funktionen, Bestandskontrolle, Bestellwesen, etc.

Im Bereich der Lagerhaltung kann das System beispielsweise wenigstens einen ersten Lagerbereich aufweisen, in dem mehrere Kennzeichen-Platinen lagerbar sind, wobei der erste Lagerbereich in Verbindung mit der zentralen Verwaltungseinheit steht, mit welcher der Lagerbestand des wenigstens einen ersten Lagerbereichs verwaltbar ist. Sobald Kennzeichen-Platinen den ersten Lagerbereich verlassen, um beispielsweise zu einer Prägepresse transportiert zu werden, kann die zentrale Verwaltungseinheit dies registrieren. Dies kann erneut durch Einlesen des die jeweilige Platine kennzeichnenden Identifikationsmerkmals erfolgen, wenn die Platine den ersten Lagerbereich verlässt. In einer Ausführungsform der Erfindung weist der erste Lagerbereich daher wenigstens eine Scanvorrichtung auf, mit der das optoelektronisch erfassbare Identifikationsmerkmal einer jeweiligen Kennzeichen-Platine erfassbar und an die zentrale Verwaltungseinheit übermittelbar ist, wenn diese Kennzeichen-Platine den ersten Lagerbereich verlässt.

Ein solches Scannen des Identifikationsmerkmals kann ferner an weiteren Positionen innerhalb des Systems erfolgen, so dass der Weg einer Platine und anschließend auch der Weg eines geprägten Kennzeichens vollständig nachverfolgt werden kann. Beispielsweise kann das System wenigstens einen zweiten Lagerbereich aufweisen, in dem geprägte Kennzeichenschilder nach einem Prägevorgang in einer Prägepresse lagerbar sind, so dass auch Zu- und Abgänge in diesem Lagerbereich durch Scannen von Identifikationsmerkmalen überwacht werden können. Die zentrale Verwaltungseinheit ist dann wenigstens zur Lagerverwaltung der mehreren Kennzeichen-Platinen im ersten und der geprägten Kennzeichenschilder im zweiten Lagerbereich ausgebildet.

Die Erfindung betrifft ferner ein zugehöriges Verfahren zur Handhabung von Kennzeichen-Platinen zur Verwendung in wenigstens einer Prägepresse, wobei die Kennzeichen-Platinen in der Prägepresse gemäß einem Prägeauftrag geprägt werden, welcher der Prägepresse von einer Auftragskomponente übermittelt wurde. Auch bei dem Verfahren weisen die Kennzeichen-Platinen jeweils ein optoelektronisch erfassbares Identifikationsmerkmal auf, in dem wenigstens eine die jeweilige Kennzeichen-Platine identifizierende Angabe hinterlegt ist, wobei das Verfahren wenigstens folgende Schritte aufweist:
a) Erfassung des Identifikationsmerkmals auf einer Kennzeichen-Platine durch die Prägepresse,
b) Auslesen der die Kennzeichen-Platine identifizierenden Angabe aus dem in Schritt a) erfassten Identifikationsmerkmal,
c) Vergleich einer in Schritt b) ausgelesenen, die Kennzeichen-Platine identifizierenden Angabe mit hinterlegten zulässigen Angaben, und
d) Freigabe eines Prägevorgangs in der Prägepresse, falls der Vergleich des Schrittes c) ergibt, dass es sich bei einer ausgelesenen, die Kennzeichen-Platine identifizierenden Angabe um eine zulässige Angabe handelt.

Soll auch das Format einer Kennzeichen-Platine überprüft werden, kann in einem optoelektronisch erfassbaren Identifikationsmerkmal das Format der jeweiligen Kennzeichen-Platine hinterlegt sein, wobei das Verfahren ferner folgende Schritte aufweist:
e) Auslesen des Formats der Kennzeichen-Platine aus dem in Schritt a) erfassten Identifikationsmerkmal,
f) Vergleich eines in Schritt e) ausgelesenen Formats einer Kennzeichen-Platine mit Informationen über das Format einer zu prägenden Kennzeichen-Platine eines Prägeauftrags, und
g) Freigabe eines Prägevorgangs in der Prägepresse, falls der Vergleich des Schrittes f) ergibt, dass das Format der Kennzeichen-Platine dem Format eines Prägeauftrags entspricht.

In Abhängigkeit von der Ausgestaltung des Systems können die Schritte b) bis g) auch hierbei wenigstens teilweise von der Prägepresse selbst durchgeführt werden, oder sie werden wenigstens teilweise von einer zentralen Verwaltungseinheit durchgeführt, wobei zwischen der zentralen Verwaltungseinheit und der wenigstens einen Prägepresse Daten ausgetauscht werden.

Führt die zentrale Verwaltungseinheit einige der Schritte durch, erfolgt bei dem Verfahren eine Datenkommunikation zwischen der Prägepresse und der zentralen Verwaltungseinheit. Das Gleiche gilt für die Übermittlung von Informationen über das Format einer Kennzeichen-Platine eines Prägeauftrags von einer Prägepresse an die zentrale Verwaltungseinheit. Im Gesamtsystem können ferner weitere Datenkommunikationen zwischen einzelnen Komponenten stattfinden. Beispielsweise können insbesondere Informationen über Kennzeichen-Platinen, deren Identifikationsmerkmal von einer Scanvorrichtung eines Lagerbereiches erfasst wurde, an die zentrale Verwaltungseinheit übermittelt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Darstellung der Vorderseite eines Ausführungsbeispiels einer Kennzeichen-Platine;
- Fig. 2: eine Darstellung der Rückseite eines Ausführungsbeispiels einer Kennzeichen-Platine mit einem Identifikationsmerkmal; und
- Fig. 3: ein Ausführungsbeispiel eines erfindungsgemäßen Systems zur Handhabung von Kennzeichen-Platinen zur Verwendung in Prägepressen.

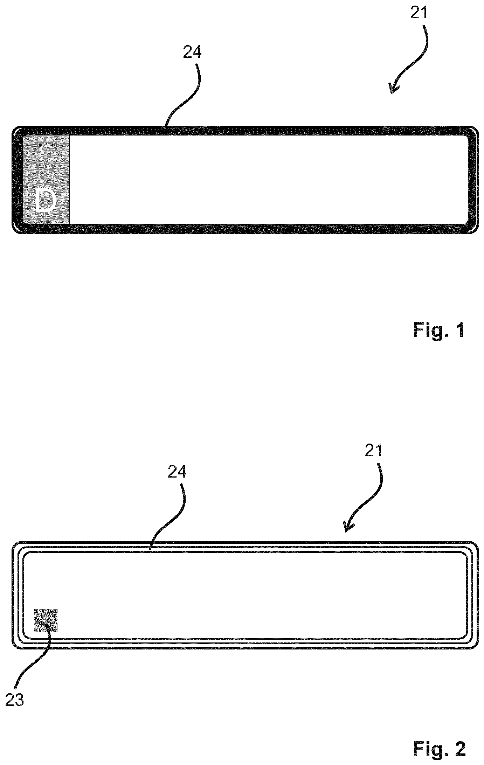

Die in Fig. 1 dargestellte Vorderseite einer Kennzeichen-Platine 21 zeigt beispielhaft eine mögliche Ausführungsform einer solchen Platine. Sie hat in diesem Ausführungsbeispiel eine langgestreckte, rechteckige Form. Es sind jedoch auch andere Formate mit anderen Seitenverhältnissen möglich. Die Platine 21 besteht aus einem Blechstreifen, wobei als Material beispielsweise eine Aluminiumlegierung gewählt werden kann. In diesen Blechstreifen ist bereits ein umlaufender Rand 24 eingeprägt, der auf der Vorderseite erhaben ausgebildet und mit Farbe bedruckt ist. Im linken Bereich der Platine sind weitere Farbaufdrucke aufgebracht, die jedoch ebenfalls nur beispielhaft zu verstehen sind. Insgesamt kann die Kennzeichen-Platine 21 landestypisch beliebige Gestaltungen aufweisen.

Auf der in Fig. 2 dargestellten Rückseite der Kennzeichen-Platine 21 ist der geprägte Rand 24 ebenfalls ersichtlich und das aufgedruckte Identifikationsmerkmal 23. Hierbei handelt es sich um einen zweidimensionalen Data-Matrixcode an sich bekannter Art. Dieser Matrixcode ist beispielsweise in einer Ecke der Platine aufgebracht und kann mit einem Handscanner oder einem internen Scanner einer Prägepresse erfasst werden, um die darin verschlüsselten Daten mittels einer entsprechenden Software auszulesen. Ferner kann anhand dieses Matrixcodes der gesamte Weg einer Kennzeichen-Platine und auch eines damit geprägten Kennzeichenschildes innerhalb eines Systems verfolgt werden.

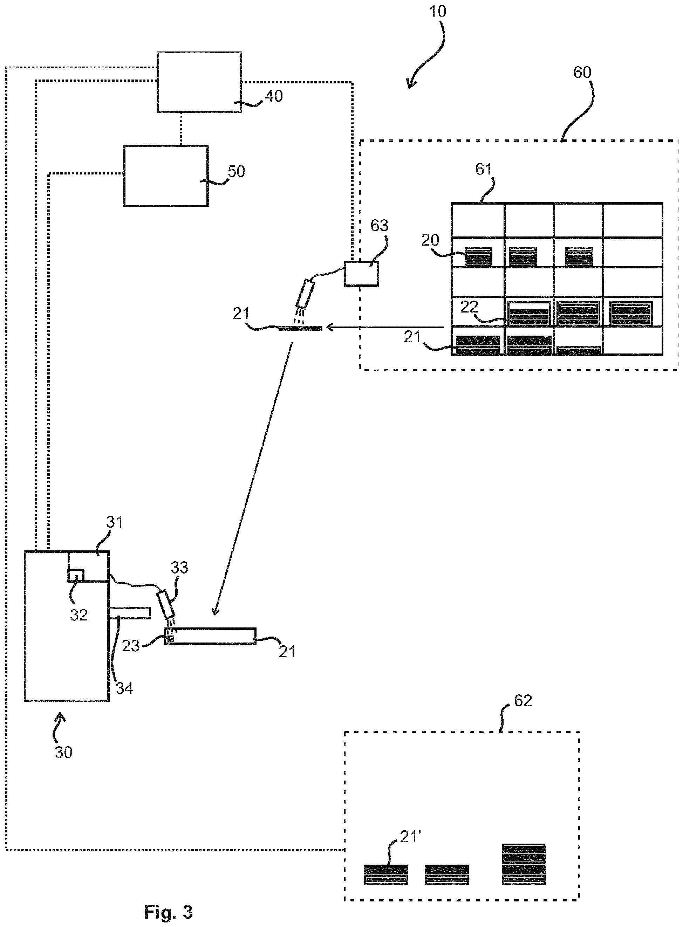

Fig. 3 zeigt schematisch ein solches System 10 mit wenigstens einer Prägepresse 30. Diese Prägepresse 30 kann beispielsweise einer Zulassungsstelle für Kraftfahrzeuge zugeordnet sein. Das System 10 umfasst jedoch vorzugsweise eine Vielzahl von Prägepressen, die innerhalb des Systems 10 auch an unterschiedlichen Orten positioniert sein können. Im Folgenden wird der grundsätzliche Aufbau der Prägepressen beispielhaft anhand der gezeigten Prägepresse 30 erläutert, die anderen Prägepressen können identisch oder ähnlich aufgebaut sein.

Die Prägepresse 30 weist eine Steuereinheit 31 auf, mit welcher die Vorgänge an der Prägepresse steuerbar sind. Diese Steuereinheit 31 steht in Verbindung mit einer Speichereinheit 32 der Prägepresse 30 und vorzugsweise wenigstens in Verbindung mit einer zentralen Verwaltungseinheit 40 des Systems 10. Diese Verbindung zwischen Prägepresse 30 und zentraler Verwaltungseinheit 40 kann kabelgebunden und/oder wenigstens streckenweise auch kabellos beispielsweise über eine Funkverbindung ausgestaltet sein. Die Verwaltungskomponente 40 kann insbesondere durch eine Serverstruktur gebildet werden.

Ferner umfasst das System 10 eine Auftragskomponente 50, über welche Prägeaufträge erzeugt und an Prägepressen 30 übermittelt werden. Hierzu kann ebenfalls eine kabelgebundene und/oder wenigstens streckenweise kabellose Kommunikationsverbindung vorgesehen sein. Diese Auftragskomponente 50 ist beispielsweise in einer Zulassungsstelle für Kraftfahrzeuge angesiedelt, in der Kennzeichen-Legenden für zu erstellende Kennzeichen von Fahrzeugen vergeben werden. Die Auftragskomponente 50 kann dabei getrennt von der zentralen Verwaltungseinheit 40 ausgebildet sein, wobei sie vorzugsweise in Verbindung mit dieser steht, um Daten austauschen zu können. Die Auftragskomponente 50 kann jedoch auch als Teil der zentralen Verwaltungseinheit 40 ausgebildet sein.

Das System 10 umfasst ferner wenigstens einen ersten Lagerbereich 60, in dem eine Vielzahl von Kennzeichen-Platinen 21 für eine spätere Verwendung gelagert werden. Dies kann beispielsweise mittels eines oder mehrerer Regallager 61 erfolgen. Dabei können die Platinen einzeln gelagert werden, oder eine größere Anzahl von Platinen ist in Verpackungen wie Kartons eingebracht und der jeweilige Karton 22 wird gelagert. Ferner können unterschiedliche Formate an Platinen vorgehalten werden. Neben dem in den Figuren 1 und 2 gezeigten länglichen Format einer Platine 21, ist beispielsweise in Fig. 3 schematisch eine weitere Platinenart 20 mit einem anderen Format dargestellt.

Der erste Lagerbereich 60 weist typischerweise wenigstens einen Wareneingang und -ausgang auf, wobei in Fig. 3 nur ein Warenausgang mit einer Scanvorrichtung 63 dargestellt ist. Der Wareneingang kann ebenfalls mit einer eigenen Scanvorrichtung ausgestattet oder auch im Bereich der Scanvorrichtung 63 angesiedelt sein und dieselbe Scanvorrichtung nutzen. Mit der Scanvorrichtung 63 werden Identifikationsmerkmale von Kennzeichen-Platinen 21, welche dem Lagerbereich 60 zugeführt werden oder diesen verlassen, erfasst und die zugehörigen Daten an die zentrale Verwaltungseinheit 40 übermittelt. Auch der weitere Weg einer Platine kann beispielsweise anhand von weiteren Scanvorgängen durchgehend verfolgt und an die Verwaltungseinheit 40 übermittelt werden.

Insbesondere wenn eine Kennzeichen-Platine 21 an einer Prägepresse 30 für die Herstellung eines KFZ-Kennzeichenschildes verwendet wird, wird das Identifikationsmerkmal der jeweiligen Platine gescannt und Daten daraus ausgelesen. Nach Erzeugung der vorgesehenen Legende auf einer Platine 21 und der Einfärbung der so geprägten Platine wird daraus ein geprägtes Kennzeichenschild 21', welches an einen Fahrzeuginhaber ausgehändigt werden kann. Auch dies kann in der Verwaltungseinheit 40 als Warenausgang aus dem System 10 vermerkt werden.

Es kann jedoch auch vorgesehen sein, dass in einer Prägepresse 30 nacheinander eine größere Anzahl von Kennzeichen geprägt und zunächst in einem zweiten Lagerbereich 62 gelagert wird. Dies kann auch mit oder ohne weiteren Scanvorgang verfolgt und an die Verwaltungseinheit 40 übermittelt werden. Ferner kann im Bereich der Prägepresse 30 ein weiteres Lager von Kennzeichen-Platinen ausgebildet sein, in dem mehrere Kennzeichen-Platinen für eine Verwendung an dieser Prägepresse 30 zwischengelagert werden. In einer solchen Ausführungsform der Erfindung, könnte es ein oder mehrere Zentrallager 60 und mehrere in Fig. 3 nicht dargestellte Zwischenlager im Bereich der Prägepressen geben. Der Wareneingang und Warenausgang aller Lager könnte durch die zentrale Verwaltungseinheit registriert werden.

So verfügt die Verwaltungseinheit 40 fortlaufend über Informationen zu allen im System 10 befindlichen Kennzeichen-Platinen 21 und gegebenenfalls auch geprägten Kennzeichenschildern 21', wobei Ein- und Ausgänge protokolliert werden können und somit nachvollziehbar sind.

Das Erfassen von Identifikationsmerkmalen von Platinen kann dabei auf unterschiedliche Arten erfolgen. Werden als Identifikationsmerkmal eindimensionale Barcodes verwendet, können als Scanvorrichtungen Barcodescanner verwendet werden. Diese können als Handscanner oder fest installierte Scanner ausgebildet sein. Werden als Identifikationsmerkmal zweidimensionale Data-Matrixcodes verwendet, kommen als Scanvorrichtungen typischerweise Scanner mit einer Kamera zum Einsatz, welche ein Bild des Matrixcodes aufnimmt, das mit einer Software ausgewertet werden kann. Besondere Bedeutung kommt dem Identifikationsmerkmal 23 einer Platine 21 bei der Verwendung der Platine in einer Prägepresse 30 zu. Anhand des Identifikationsmerkmals können Prägevorgänge optimiert und Manipulationen verhindert werden. Erfindungsgemäß ist eine Prägepresse 30 daher dazu ausgebildet, das Identifikationsmerkmal 23 einer für einen bestimmten Prägeauftrag zu verwendenden Platine vor oder während des Einschubs der Platine in die Prägepresse zu erfassen. Hierzu kann ein Handscanner 33 vorhanden sein, wie es beispielhaft in der Fig. 3 gezeigt ist. Dieser Handscanner 33 steht in Verbindung mit der Steuereinheit 31 der Prägepresse 30, so dass erfasste Informationen von einer Software der Steuereinheit 31 ausgewertet werden können.

Dabei erfolgt die Informationserfassung mit einem Handscanner 33 vor dem Einschieben der Platine 21 in die Prägepresse 30. Ein oder mehrere Scanner können jedoch auch in das Gehäuse der Prägepresse 30 integriert sein, um ein Identifikationsmerkmal zu erfassen, während die Platine 21 in die Prägepresse 30 eingeschoben wird. Dazu wird die Platine 21 beispielsweise in eine in der Fig. 3 schematisch gezeigte Schublade 34 eingelegt und in das Gehäuse der Prägepresse 30 eingeschoben. Dies erfolgt zusammen mit Prägewerkzeugen/Klotzwerkzeugen für eine zu erzeugende Kennzeichen-Legende, die aus einem Prägeauftrag erhalten wird, welcher der Steuereinheit 31 zuvor von der Auftragskomponente 50 übermittelt wurde. Barcodescanner oder Kameras am oder innerhalb des Gehäuses der Prägepresse 30 können dann das Identifikationsmerkmal 23 auf einer Platine 21 erfassen.

Erfindungsgemäß ist vorgesehen, dass ein Prägevorgang an einer Prägepresse 30 nur freigegeben wird, wenn die aus einem Identifikationsmerkmal 23 einer Platine 21 ausgelesene Seriennummer zulässig ist. Beispielsweise kann hierzu ein Vergleich der ausgelesenen Seriennummer mit zulässigen Seriennummern erfolgen. Dieser Vergleich kann von der Steuereinheit 31 der Prägepresse 30 durchgeführt werden, sofern in dieser die zulässigen Seriennummern hinterlegt sind. Der Vergleich kann jedoch auch von der zentralen Verwaltungseinheit 40 durchgeführt werden, nachdem eine zu prüfende Seriennummer von der Prägepresse 30 an die Verwaltungseinheit 40 übermittelt wurde. Diese sendet dann das Ergebnis der Überprüfung zurück an die Prägepresse 30.

Zulässig kann eine Seriennummer insbesondere sein, wenn sie zu einem bestimmten Nummernkreis gehört. Eine genauere Prüfung kann vorsehen, dass einmal verwendete Seriennummern aus einem Pool von vergebenen Nummern gestrichen werden bzw. anderweitig als verwendet gekennzeichnet werden, so dass für die Freigabeprüfung ein Vergleich der erfassten Seriennummer mit noch nicht gestrichenen/gekennzeichneten Seriennummern stattfindet. Ist die Seriennummer nicht zu finden, wurde sie bereits verwendet und es ist keine nochmalige Verwendung möglich. Alternativ könnten auch zulässige verwendete Seriennummern gespeichert werden und für die Freigabeprüfung ein Vergleich erfolgen, ob eine erfasste Seriennummer bereits gespeichert wurde. Ist dies der Fall, wäre keine nochmalige Verwendung möglich.

Als zusätzliche Sicherheitsmaßnahme kann die Erfindung vorsehen, dass beim Einbringen einer Platine 21 in eine Prägepresse 30 auch eine Formatüberprüfung stattfindet. Dabei wird das aus dem erfassten Identifikationsmerkmal 23 ausgelesene Format einer Kennzeichen-Platine 21 mit dem vorgesehenen Format eines Prägeauftrags verglichen. Der Prägevorgang wird nur freigegeben, wenn die beiden Formate übereinstimmen. So lassen sich nicht nur Fehlprägungen verhindern, sondern auch Manipulationsversuche weiter erschweren.

Die Formaterfassung an einer Prägepresse kann ferner dazu genutzt werden, um dem Gesamtsystem mit der zentralen Verwaltungseinheit 40 Informationen über verwendete Formate bereitzustellen. Wird eine Kennzeichen-Platine 21 mit einem bestimmten Format an einer Prägepresse 30 verwendet, kann diese Information der zentralen Verwaltungseinheit 40 übermittelt werden, die dies in ihrem Warenbestandssystem registriert. Melden so alle Prägepressen des Systems 10 die an ihnen verwendeten Formate von Kennzeichen-Platinen, kann die Verwaltungseinheit 40 darüber den Bestand an verschiedenen Formaten überwachen und ein Bestellsystem optimieren.

### Bezugszeichenliste:

- 10: System
- 20: Platine, Kennzeichen-Platine, erstes Format
- 21: Platine, Kennzeichen-Platine, zweites Format
- 21': Kennzeichenschild
- 22: Verpackung, Karton
- 23: Identifikationsmerkmal, Data-Matrixcode
- 24: Rand
- 30: Prägepresse
- 31: Steuereinheit
- 32: Speichereinheit
- 33: Handscanner
- 34: Schublade
- 40: Zentrale Verwaltungseinheit
- 50: Auftragskomponente
- 60: Erster Lagerbereich
- 61: Regallager
- 62: Zweiter Lagerbereich
- 63: Scanvorrichtung

## Patentansprüche

1. System (10) zur Handhabung von Kennzeichen-Platinen (21) zur Verwendung in Prägepressen (30),
wobei das System wenigstens folgende Komponenten umfasst:
- wenigstens eine Prägepresse (30), die zum Prägen von Kennzeichen-Platinen (21) ausgebildet ist und eine Steuereinheit (31) umfasst;
- eine Auftragskomponente (50), welche zur Erzeugung von Daten für Prägeaufträge und zur Übermittlung dieser Prägeaufträge an die Steuereinheit (31) wenigstens einer Prägepresse (30) ausgebildet ist, wobei die Daten für einen Prägeauftrag Informationen über das Format einer zu prägenden Kennzeichen-Platine (21) umfassen;
- eine zentrale Verwaltungseinheit (40), die in kommunikativer Verbindung mit der wenigstens einen Prägepresse (30) steht;
- mehrere Kennzeichen-Platinen (21), die jeweils ein optoelektronisch erfassbares Identifikationsmerkmal (23) aufweisen, in dem verschiedene Informationen verschlüsselt hinterlegt sind und wenigstens eine die jeweilige Kennzeichen-Platine (21) eindeutig identifizierende Angabe hinterlegt ist, wobei
a) die Prägepresse (30) zur Erfassung des Identifikationsmerkmals (23) einer Kennzeichen-Platine (21) ausgebildet ist,
und das System (10) ausgebildet ist
b) zum Auslesen der die Kennzeichen-Platine (21) identifizierenden Angabe aus einem von der Prägepresse (30) erfassten Identifikationsmerkmal (23),
c) zum Vergleich einer aus dem Identifikationsmerkmal (23) ausgelesenen, die Kennzeichen-Platine (21) identifizierenden Angabe mit hinterlegten zulässigen Angaben, und
d) zur Freigabe eines Prägevorgangs in der Prägepresse (30), falls die Durchführung des Vergleichs unter c) ergibt, dass es sich bei der ausgelesenen, die Kennzeichen-Platine (21) identifizierenden Angabe um eine zulässige Angabe handelt,
wobei in dem optoelektronisch erfassbaren Identifikationsmerkmal (23) einer Kennzeichen-Platine (21) ergänzend das Format der jeweiligen Kennzeichen-Platine (21) verschlüsselt hinterlegt ist, und
wobei das System (10) ausgebildet ist
e) zum Auslesen des Formats der Kennzeichen-Platine (21) aus einem von der Prägepresse (30) erfassten Identifikationsmerkmal (23),
f) zum Vergleich eines aus dem Identifikationsmerkmal (23) ausgelesenen Formats einer Kennzeichen-Platine (21) mit Informationen über das Format einer zu prägenden Kennzeichen-Platine (21) eines Prägeauftrags, und
e) zur Freigabe eines Prägevorgangs in der Prägepresse (30), falls die Durchführung des Vergleichs unter f) ergibt, dass das Format der Kennzeichen-Platine (21) dem Format eines Prägeauftrags entspricht.

2. System nach Anspruch 1,
**dadurch gekennzeichnet, dass** die Prägepresse (30) zur Durchführung einer oder mehrerer der Vorgänge b) bis g) ausgebildet ist.

3. System nach einem oder beiden der Ansprüche 1 und 2,
**dadurch gekennzeichnet, dass** die zentrale Verwaltungseinheit (40) zur Durchführung einer oder mehrerer der Vorgänge b) bis g) ausgebildet ist.

4. System nach einem oder mehreren der Ansprüche 1 bis 3,
**dadurch gekennzeichnet, dass** das optoelektronisch erfassbare Identifikationsmerkmal (23) der Kennzeichen-Platinen (21) ein Barcode oder ein Data-Matrixcode ist.

5. System nach einem oder mehreren der Ansprüche 1 bis 4,
**dadurch gekennzeichnet, dass** die Prägepresse (30) zur Erfassung des Identifikationsmerkmals (23) von einer Kennzeichen-Platine (21) einen internen Scanner und/oder einen Handscanner (33) aufweist.

6. System nach einem oder mehreren der Ansprüche 1 bis 5,
**dadurch gekennzeichnet, dass** es wenigstens einen ersten Lagerbereich (60) aufweist, in dem mehrere Kennzeichen-Platinen (21) lagerbar sind, wobei der erste Lagerbereich (60) in kommunikativer Verbindung mit der zentralen Verwaltungseinheit (40) steht.

7. System nach Anspruch 6,
**dadurch gekennzeichnet, dass** der erste Lagerbereich (60) wenigstens eine Scanvorrichtung (63) aufweist, mit der das optoelektronisch erfassbare Identifikationsmerkmal (23) einer jeweiligen Kennzeichen-Platine (21) erfassbar und an die zentrale Verwaltungseinheit (40) übermittelbar ist, wenn diese Kennzeichen-Platine (21) den ersten Lagerbereich (60) verlässt.

8. System nach einem oder beiden der Ansprüche 6 und 7,
**dadurch gekennzeichnet, dass** es wenigstens einen zweiten Lagerbereich (62) aufweist, in dem geprägte Kennzeichen (21') nach einem Prägevorgang in einer Prägepresse (30) lagerbar sind, wobei der zweite Lagerbereich (62) in kommunikativer Verbindung mit der zentralen Verwaltungseinheit (40) steht.

9. System nach Anspruch 8,
**dadurch gekennzeichnet, dass** die zentrale Verwaltungseinheit (40) wenigstens zur Lagerverwaltung der mehreren Kennzeichen-Platinen (21) im ersten Lagerbereich (60) und der geprägten Kennzeichen (21') im zweiten Lagerbereich (62) ausgebildet ist.

10. Verfahren zur Handhabung von Kennzeichen-Platinen (21) zur Verwendung in wenigstens einer Prägepresse (30), wobei die Kennzeichen-Platinen (21) in der Prägepresse (30) gemäß einem Prägeauftrag geprägt werden, welcher der Prägepresse (30) von einer Auftragskomponente (50) übermittelt wird, und die Kennzeichen-Platinen (21) jeweils ein optoelektronisch erfassbares Identifikationsmerkmal (23) aufweisen, in dem verschiedene Informationen verschlüsselt hinterlegt sind und wenigstens eine die jeweilige Kennzeichen-Platine (21) eindeutig identifizierende Angabe hinterlegt ist, wobei das Verfahren wenigstens folgende Schritte aufweist:
a) Erfassung des Identifikationsmerkmals (23) einer Kennzeichen-Platine (21) durch die Prägepresse (30),
b) Auslesen der die Kennzeichen-Platine (21) identifizierenden Angabe aus dem in Schritt a) erfassten Identifikationsmerkmal (23),
c) Vergleich einer in Schritt b) ausgelesenen, die Kennzeichen-Platine (21) identifizierenden Angabe mit hinterlegten zulässigen Angaben, und
d) Freigabe eines Prägevorgangs in der Prägepresse (30), falls der Vergleich des Schrittes c) ergibt, dass es sich bei einer ausgelesenen, die Kennzeichen-Platine (21) identifizierenden Angabe um eine zulässige Angabe handelt,
wobei in dem optoelektronisch erfassbaren Identifikationsmerkmal (23) ergänzend das Format der jeweiligen Kennzeichen-Platine (21) verschlüsselt hinterlegt ist, und
wobei das Verfahren ferner folgende Schritte aufweist:
e) Auslesen des Formats der Kennzeichen-Platine (21) aus dem in Schritt a) erfassten Identifikationsmerkmal (23),
f) Vergleich eines in Schritt e) ausgelesenen Formats einer Kennzeichen-Platine (21) mit Informationen über das Format einer zu prägenden Kennzeichen-Platine (21) eines Prägeauftrags, und
g) Freigabe eines Prägevorgangs in der Prägepresse (30), falls der Vergleich in Schritt f) ergibt, dass das Format der Kennzeichen-Platine (21) dem Format eines Prägeauftrags entspricht.

11. Verfahren nach Anspruch 10,
**dadurch gekennzeichnet, dass** die Schritte b) bis g) wenigstens teilweise von der Prägepresse (30) durchgeführt werden.

12. Verfahren nach einem oder mehreren der Ansprüche 10 oder 11,
**dadurch gekennzeichnet, dass** die Schritte b) bis g) wenigstens teilweise von einer zentralen Verwaltungseinheit (40) durchgeführt werden, wobei zwischen der zentralen Verwaltungseinheit (40) und der wenigstens einen Prägepresse (30) Daten ausgetauscht werden.

13. Verfahren nach einem oder mehreren der Ansprüche 10 bis 12,
**dadurch gekennzeichnet, dass** das Verfahren in einem System nach einem oder mehreren der Ansprüche 1 bis 10 durchgeführt wird.

14. Verfahren nach Anspruch 13,
**dadurch gekennzeichnet, dass** Informationen über Kennzeichen-Platinen (21), deren optoelektronisch erfassbares Identifikationsmerkmal (23) von einer Scanvorrichtung (63) eines ersten Lagerbereiches (60) erfasst wurde, an die zentrale Verwaltungseinheit (40) übermittelt werden.

## Claims

1. A system (10) for handling number plate panels (21) for use in embossing presses (30),
the system comprising at least the following components:
- at least one embossing press (30) configured for embossing number plate panels (21) and comprising a control unit (31);
- a task component (50) configured for generating data for embossing tasks and for transmitting these embossing tasks to the control unit (31) of at least one embossing press (30), wherein the data for an embossing task comprise information about the format of a number plate panel (21) to be embossed;
- a central management unit (40) which is communicatively connected with the at least one embossing press (30);
- several number plate panels (21), each of which has an opto-electronically detectable identification feature (23) in which various information is recorded in an encrypted manner and at least one indication is recorded, which uniquely identifies the respective number plate panel (21), wherein
a) the embossing press (30) is configured for detecting an identification feature (23) of a number plate panel (21),
and the system (10) is configured
b) for reading out the indication identifying the number plate panel (21) from an identification feature (23) detected by the embossing press (30),
c) for comparing an indication, which was read out from the identification feature (23) and which identifies the number plate panel (21), with recorded admissible indications, and
d) for enabling an embossing process in the embossing press (30) if carrying out the comparison under c) yields that the read-out indication identifying the number plate panel (21) is an admissible indication,
wherein the format of the respective number plate panel (21) is additionally recorded in an encrypted manner in the opto-electronically detectable identification feature (23) of a number plate panel (21), and
wherein the system (10) is configured
e) for reading out the format of the number plate panel (21) from an identification feature (23) detected by the embossing press (30),
f) for comparing a format of a number plate panel (21) read out from the identification feature (23) with information on the format of a number plate panel (21) to be embossed of an embossing task, and
e) for enabling an embossing process in the embossing press (30) if carrying out a comparison under f) yields that the format of the number plate panel (21) corresponds to the format of an embossing task.

2. The system according to claim 1,
**characterized in that** the embossing press (30) is configured for carrying out one or several of the processes b) to g).

3. The system according to any one or both of the claims 1 and 2,
**characterized in that** the central management unit (40) is configured for carrying out one or several of the processes b) to g).

4. The system according to any one or several of the claims 1 to 3,
**characterized in that** the opto-electronically detectable identification feature (23) of the number plate panel (21) is a barcode or data matrix code.

5. The system according to any one or several of the claims 1 to 4,
**characterized in that** the embossing press (30) has an internal scanner and/or a handheld scanner (33) for detecting an identification feature (23) of a number plate panel (21).

6. The system according to any one or several of the claims 1 to 5,
**characterized in that** it has at least one first storage area (60) in which several number plate panels (21) can be stored, wherein the first storage area (60) is communicatively connected with the central management unit (40).

7. The system according to claim 6,
**characterized in that** the first storage area (60) has at least one scanning device (63) with which the opto-electronically detectable identification feature (23) of a respective number plate panel (21) can be detected and transmitted to the central management unit (40) when this number plate panel (21) leaves the first storage area (60).

8. The system according to any one or both of the claims 6 and 7,
**characterized in that** it has at least one second storage area (62) in which embossed number plates (21') can be stored subsequent to an embossing process in an embossing press (30), wherein the second storage area (62) is communicatively connected with the central management unit (40).

9. The system according to claim 8,
**characterized in that** the central management unit (40) is configured at least for managing the storage of the several number plate panel (21) in the first storage area (60) and of the embossed number plates (21') in the second storage area (62).

10. A method for handling number plate panels (21) for use in at least one embossing press (30), wherein the number plate panels (21) are embossed in the embossing press (30) in accordance with an embossing task transmitted to the embossing press (30) by a task component (50), and the number plate panels (21) each have an opto-electronically detectable identification feature (23) in which various information is recorded in an encrypted manner and at least one indication is recorded, which uniquely identifies the respective number plate panel (21), the method comprising at least the following steps:
a) detecting an identification feature (23) of a number plate panel (21) by the embossing press (30),
b) reading out the indication identifying the number plate panel (21) from the identification feature (23) detected in step a),
c) comparing an indication read out in step b), which identifies the number plate panel (21), with recorded admissible indications, and
d) enabling an embossing process in the embossing press (30) if the comparison of step c) yields that a read-out indication identifying the number plate panel (21) is an admissible indication,
wherein the format of the respective number plate panel (21) is additionally recorded in an encrypted manner in the opto-electronically detectable identification feature (23), and
the method further having the steps:
e) reading out the format of the number plate panel (21) from the identification feature (23) detected in step a),
f) comparing a format of a number plate panel (21) read out in step e) with information on the format of a number plate panel (21) to be embossed of an embossing task, and
g) enabling an embossing process in the embossing press (30) if the comparison in step f) yields that the format of the number plate panel (21) corresponds to the format of the embossing task.

11. The method according to claim 10,
**characterized in that** steps b) to g) are at least partially carried out by the embossing press (30).

12. The method according to any one or several of the claims 10 to 11,
**characterized in that** steps b) to g) are at least partially carried out by a central management unit (40), wherein data are exchanged between the central management unit (40) and the at least one embossing press (30).

13. The method according to any one or several of the claims 10 to 12,
**characterized in that** the method is carried out in a system according to one or several of the claims 1 to 10.

14. The method according to claim 13,
**characterized in that** information about number plate panels (21), whose opto-electronically detectable identification feature (23) was detected by a scanning device (63) of a first storage area (60), is transmitted to the central management unit (40).

## Revendications

1. Système (10) de manipulation d'ébauches de plaque d'immatriculation (21) destinées à être utilisées dans des presses à estamper (30),
dans lequel ledit système comprend au moins les composants suivants:
- au moins une presse à estamper (30) qui est conçue pour estamper des ébauches de plaques d'immatriculation (21) et comprend une unité de commande (31);
- un composant de commande (50) qui est conçu pour générer des données de commandes d'estampage et pour transmettre ces commandes d'estampage à l'unité de commande (31) d'au moins une presse à estamper (30), dans lequel les données pour une commande d'estampage comprennent des informations relatives au format d'une ébauche de plaque d'immatriculation (21) à estamper;
- une unité centrale de gestion (40) qui est en liaison communicante avec ladite au moins une presse à estamper (30);
- une pluralité d'ébauches de plaque d'immatriculation (21) qui présentent chacune une caractéristique d'identification (23) détectable de façon optoélectronique dans laquelle sont stockées de manière cryptée diverses informations et dans laquelle est stockée au moins une information identifiant clairement l'ébauche de plaque d'immatriculation (21) respective, dans lequel
a) la presse à estamper (30) est conçue pour détecter la caractéristique d'identification (23) d'une ébauche de plaque d'immatriculation (21),
et le système (10) est conçu
b) pour lire les informations identifiant l'ébauche de plaque d'immatriculation (21) à partir d'une caractéristique d'identification (23) détectée par la presse à estamper (30),
c) pour comparer une information lue à partir de la caractéristique d'identification (23) et identifiant l'ébauche de plaque d'immatriculation (21), à des informations admissibles stockées, et
d) pour libérer une opération d'estampage dans la presse à estamper (30) s'il ressort de la mise en oeuvre de la comparaison sous c) que l'information lue et identifiant l'ébauche de plaque d'immatriculation (21) est une information admissible,
dans lequel, en complément, le format de l'ébauche de plaque d'immatriculation (21) respective est stocké de manière cryptée dans la caractéristique d'identification (23) optoélectroniquement détectable d'une ébauche de plaque d'immatriculation (21), et dans lequel le système (10) est conçu
e) pour lire le format de l'ébauche de plaque d'immatriculation (21) à partir d'une caractéristique d'identification (23) détectée par la presse à estamper (30),
f) pour comparer un format d'une ébauche de plaque d'immatriculation (21) lu à partir de la caractéristique d'identification (23), à des informations relatives au format d'une ébauche de plaque d'immatriculation (21) à estamper d'une commande d'estampage, et
e) pour libérer une opération d'estampage dans la presse à estamper (30) s'il ressort de la mise en oeuvre de la comparaison sous f) que le format de l'ébauche de plaque d'immatriculation (21) correspond au format d'une commande d'estampage.

2. Système selon la revendication 1,
**caractérisé par le fait que** la presse d'estampage (30) est conçue pour mettre en oeuvre une ou plusieurs des opérations b) à g).

3. Système selon l'une ou les deux revendications 1 et 2,
**caractérisé par le fait que** l'unité centrale de gestion (40) est conçue pour mettre en oeuvre une ou plusieurs des opérations b) à g).

4. Système selon une ou plusieurs des revendications 1 à 3,
**caractérisé par le fait que** la caractéristique d'identification (23) optoélectroniquement détectable des ébauches de plaque d'immatriculation (21) est un code à barres ou un code de matrice de données.

5. Système selon une ou plusieurs des revendications 1 à 4,
**caractérisé par le fait que** la presse à estamper (30) comprend un scanner interne et/ou un scanner à main (33) destiné à détecter la caractéristique d'identification (23) d'une ébauche de plaque d'immatriculation (21).

6. Système selon une ou plusieurs des revendications 1 à 5,
**caractérisé par le fait qu'**il comprend au moins une première zone de stockage (60) dans laquelle plusieurs ébauches de plaque d'immatriculation (21) peuvent être stockées, dans lequel ladite première zone de stockage (60) est en liaison communicante avec l'unité centrale de gestion (40).

7. Système selon la revendication 6,
**caractérisé par le fait que** la première zone de stockage (60) présente au moins un dispositif de balayage (63) au moyen duquel la caractéristique d'identification (23) optoélectroniquement détectable d'une ébauche de plaque d'immatriculation (21) respective peut être détectée et être transmise à l'unité centrale de gestion (40) lorsque cette ébauche de plaque d'immatriculation (21) quitte la première zone de stockage (60).

8. Système selon l'une ou les deux des revendications 6 et 7,
**caractérisé par le fait qu'**il comprend au moins une deuxième zone de stockage (62) dans laquelle des ébauches de plaque d'immatriculation (21') estampées peuvent être stockées après une opération d'estampage dans une presse à estamper (30), dans lequel ladite deuxième zone de stockage (62) est en liaison communicante avec l'unité centrale de gestion (40).

9. Système selon la revendication 8,
**caractérisé par le fait que** l'unité centrale de gestion (40) est conçue au moins pour la gestion de stockage de la pluralité d'ébauches de plaque d'immatriculation (21) dans la première zone de stockage (60) et des ébauches de plaque d'immatriculation (21') estampées dans la deuxième zone de stockage (62).

10. Procédé de manipulation d'ébauches de plaque d'immatriculation (21) à utiliser dans au moins une presse à estamper (30), dans lequel les ébauches de plaque d'immatriculation (21) sont estampées dans la presse à estamper (30) selon une commande d'estampage qui est transmise à la presse à estamper (30) par un composant de commande (50), et les ébauches de plaque d'immatriculation (21) présentent chacune une caractéristique d'identification (23) optoélectroniquement détectable dans laquelle sont stockées de manière cryptée diverses informations et dans laquelle est stockée au moins une information identifiant clairement l'ébauche de plaque d'immatriculation (21) respective, le procédé comprenant au moins les étapes suivantes consistant à:
a) détecter la caractéristique d'identification (23) d'une ébauche de plaque d'immatriculation (20) par la presse à estamper (30);
b) lire l'information identifiant l'ébauche de plaque d'immatriculation (21) à partir de la caractéristique d'identification (23) détectée à l'étape a),
c) comparer une information lue à l'étape b) et identifiant l'ébauche de plaque d'immatriculation (21), à des informations admissibles stockées, et
d) libérer une opération d'estampage dans la presse à estamper (30) s'il ressort de la comparaison de l'étape c) qu'une information lue et identifiant l'ébauche de plaque d'immatriculation (21) est une information admissible,
dans lequel, en complément, le format de l'ébauche de plaque d'immatriculation (21) respective est stocké de manière cryptée dans la caractéristique d'identification (23) optoélectroniquement détectable, et
le procédé comprenant en outre les étapes suivantes consistant à:
e) lire le format de l'ébauche de plaque d'immatriculation (21) à partir de la caractéristique d'identification (23) détectée à l'étape a),
f) comparer un format d'une ébauche de plaque d'immatriculation (21) lu à l'étape e), à des informations relatives au format d'une ébauche de plaque d'immatriculation (21) à estamper d'une commande d'estampage, et
g) libérer une opération d'estampage dans la presse à estamper (30) s'il ressort de la comparaison à l'étape f) que le format de l'ébauche de plaque d'immatriculation (20) correspond au format d'une commande d'estampage.

11. Procédé selon la revendication 10,
**caractérisé par le fait que** les étapes b) à g) sont réalisées au moins en partie par la presse à estamper (30).

12. Procédé selon une ou plusieurs des revendications 10 ou 11,
**caractérisé par le fait que** les étapes b) à g) sont réalisées au moins en partie par une unité centrale de gestion (40), des données étant échangées entre l'unité centrale de gestion (40) et ladite au moins une presse à estamper (30).

13. Procédé selon une ou plusieurs des revendications 10 à 12,
**caractérisé par le fait que** le procédé est mis en oeuvre dans un système selon une ou plusieurs des revendications 1 à 10.

14. Procédé selon la revendication 13,
**caractérisé par le fait que** des informations relatives à des ébauches de plaque d'immatriculation (21) dont la caractéristique d'identification (23) optoélectroniquement détectable a été détectée par un dispositif de balayage (63) d'une première zone de stockage (60) sont transmises à l'unité centrale de gestion (40).
